(19) **Europäisches Patentamt European Patent Office Office européen des brevets**

(11) **EP 3 652 563 B1**

(12) **FASCICULE DE BREVET EUROPEEN**

(45) Date de publication et mention
de la délivrance du brevet:
**11.08.2021 Bulletin 2021/32**

(21) Numéro de dépôt: **18736919.4**

(22) Date de dépôt: **09.07.2018**

(51) Int Cl.:
*G01T 3/00* [(2006.01)]     *G01T 5/06* [(2006.01)]

(86) Numéro de dépôt international:
**PCT/EP2018/068508**

(87) Numéro de publication internationale:
**WO 2019/011841 (17.01.2019 Gazette 2019/03)**

(54) **DETECTEUR ET SPECTROMETRE DE NEUTRONS RAPIDES**

**DETEKTOR UND SPEKTROMETER FÜR SCHNELLE NEUTRONEN**

**FAST NEUTRON DETECTOR AND SPECTROMETER**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.07.2017 FR 1756703**

(43) Date de publication de la demande:
**20.05.2020 Bulletin 2020/21**

(73) Titulaire: **Centre National de la Recherche
Scientifique
75016 Paris (FR)**

(72) Inventeurs:
• **SANTOS, Daniel
38330 Biviers (FR)**
• **GUILLAUDIN, Olivier
38640 Claix (FR)**
• **SAUZET, Nadine
38340 Voreppe (FR)**

(74) Mandataire: **Marks & Clerk France
Immeuble "Visium"
22, avenue Aristide Briand
94117 Arcueil Cedex (FR)**

(56) Documents cités:
**EP-A1- 2 708 918**

• **MAIRE D ET AL: "First Measurement of a 127 keV
Neutron Field with a $\mu$-TPC Spectrometer",
IEEE TRANSACTIONS ON NUCLEAR SCIENCE,
IEEE SERVICE CENTER, NEW YORK, NY, US, vol.
61, no. 4, 2 août 2014 (2014-08-02), pages
2090-2096, XP011556478, ISSN: 0018-9499, DOI:
10.1109/TNS.2014.2307093 [extrait le 2014-08-14]**
• **ROCCARO A ET AL: "A background-free
direction-sensitive neutron detector", NUCLEAR
INSTRUMENTS & METHODS IN PHYSICS
RESEARCH. SECTION A: ACCELERATORS,
SPECTROMETERS, DETECTORS, AND
ASSOCIATED EQUIPMENT, ELSEVIER BV *
NORTH-HOLLAND, NL, vol. 608, no. 2, 11
septembre 2009 (2009-09-11), pages 305-309,
XP026541588, ISSN: 0168-9002, DOI:
10.1016/J.NIMA.2009.06.102 [extrait le
2009-07-10]**

**Description**

Domaine

La présente demande concerne un dispositif de détection et de mesure de l'énergie de neutrons.

Exposé de l'art antérieur

Certaines applications médicales de radiothérapie, de contrôle par radiographie par exemple sur des chantiers, ou l'industrie nucléaire, utilisent des sources de neutrons. Dans ces applications, il est utile de connaître l'énergie des neutrons émis, par exemple pour pouvoir estimer la dose de rayonnement ionisant reçue par un patient ou par un opérateur.

Dans d'autres applications telles que, par exemple, la lutte anti-terroriste, on recherche la présence de matériaux fissiles, et pour cela on détecte l'énergie des neutrons émis par ces matériaux fissiles afin de déterminer leur nature.

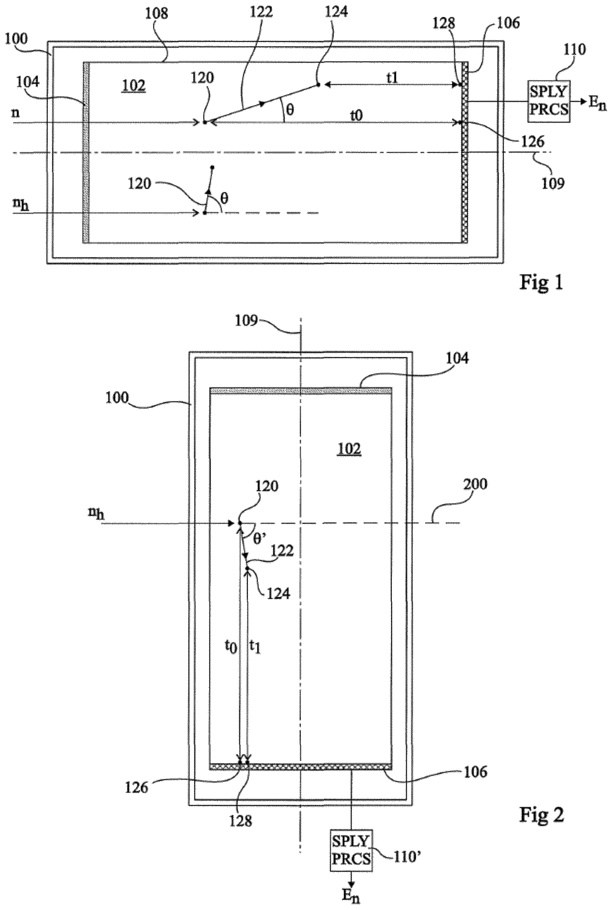

La figure 1 est une vue schématique en coupe d'un dispositif de mesure d'énergie de neutrons, par exemple mis en œuvre dans Maire et al., IEEE Transactions On Nuclear Science, Vol. 61., N.4,2014.

Le dispositif comprend une enceinte 100, par exemple cylindrique, contenant un gaz 102. Deux électrodes, une cathode 104 et une anode 106, sont situées à l'intérieur de l'enceinte 100, et forment par exemple les extrémités parallèles opposées d'une cage de champ 108 cylindrique de même axe 109 que l'enceinte. L'intérieur de la cage 108 est rempli du gaz 102. La cage de champ 108 est configurée pour qu'un champ électrique uniforme ou quasiment uniforme soit généré dans la cage lorsqu'une tension d'alimentation est appliquée entre les électrodes 104 et 106. L'anode 106 comprend des détecteurs d'électrons (non représentés) disposés en matrice. La cage 108 et la matrice sont reliées à un circuit d'alimentation et de traitement 110 (SPLY PRCS).

En fonctionnement, les électrodes sont alimentées par le circuit 110. Le détecteur est orienté vers un émetteur de neutrons de telle sorte que les neutrons soient incidents selon la direction anode-cathode.

Quelques-uns des neutrons incidents entrent en collision avec des noyaux du gaz. On considère un de ces neutrons, n, d'énergie $E_n$, qui heurte un noyau du gaz en un point 120. Le noyau emporte une fraction de l'énergie $E_n$ et est projeté avec un angle θ par rapport à l'axe 109, direction d'incidence du neutron. Le noyau heurté, ou noyau de recul, cède ensuite son énergie au milieu gazeux, en arrachant des électrons à des atomes ou des molécules du gaz qui deviennent des ions. Il en résulte une trace de paires électron-ion 122, ou trace ionisée. Le noyau est freiné à chaque fois qu'il arrache un électron. La trace s'arrête en point 124 où le noyau de recul n'a plus assez de vitesse pour arracher d'autres électrons. L'angle 0 entre la direction d'incidence des neutrons et la direction de la trace est aléatoire et donc peut varier à chaque collision.

Les électrons arrachés, c'est-à-dire générés par ionisation du gaz, rejoignent l'anode en suivant la direction cathode-anode, grâce à un champ électrique entre la cathode et l'anode. Les divers électrons parviennent à différentes positions et à des instants différents sur la matrice de détecteurs. Les électrons générés au point 120 parviennent à un détecteur 126 de la matrice après un temps de parcours t0, et les électrons générés au point 124 parviennent à un détecteur 128 de la matrice après un temps de parcours t1. En pratique, le temps de formation de la trace 122 est négligeable devant le temps de dérive des électrons jusqu'à l'anode.

Le circuit 110 mesure le nombre $N_e$ d'électrons parvenus sur la matrice de détecteurs, ainsi que les positions et les instants d'arrivée des électrons.

D'une part, à partir du nombre $N_e$ d'électrons, on déduit l'énergie initiale $E_p$ liée à la vitesse avec laquelle le noyau de recul a été propulsé lors de la collision, en utilisant successivement les relations :

$$E_i = N_e * \Delta E \quad (1)$$

et

$$E_p = E_i / Q \quad (2)$$

où $\Delta E$ est l'énergie de création d'une paire électron-ion dans le gaz, connue et dépendante de la nature du gaz, c'est-à-dire l'énergie qu'il faut fournir pour générer un électron par ionisation du gaz ;

$E_i$ est l'énergie d'ionisation qui a été cédée au milieu gazeux par le noyau de recul en générant des paires électron-ion ; et

Q désigne le facteur d'extinction en ionisation de recul nucléaire, connu sous l'expression anglaise "nuclear recoil ionization quenching factor", c'est-à-dire le rapport entre l'énergie $E_i$ d'ionisation de la trace et l'énergie initiale $E_p$, inférieur à 1 du fait qu'une partie de l'énergie initiale $E_p$ n'est pas utilisée pour ioniser le gaz.

D'autre part, on calcule la différence t0-t1 entre les temps de parcours t0 et t1. Cette différence est égale à la différence entre les instants mesurés d'arrivée au niveau des détecteurs 126 et 128. A partir de la différence t0-t1, de la vitesse (connue par ailleurs) des électrons pour dériver jusqu'à l'anode, et de la distance entre les détecteurs 126 et 128, on détermine l'angle θ entre la direction anode-cathode et celle de la trace 122.

L'énergie $E_n$ du neutron incident est déterminée à partir de l'énergie $E_p$ du noyau de recul et de l'angle θ par la relation :

$$E_n = A\frac{E_p}{\cos^2\theta} \qquad (3)$$

où A est un nombre constant fonction du rapport entre les masses du neutron et du noyau de recul.

Un problème est que lorsqu'il s'agit de neutrons rapides, par exemple d'énergie supérieure à 5 MeV, la mesure de l'énergie de neutrons par des dispositifs du type décrit ci-dessus pose divers problèmes, avec typiquement des marges d'erreur risquant d'être de l'ordre de la mesure elle-même. Les doses reçues risquent d'être mal estimées, ou la caractérisation de la source neutronique risque d'être mal effectuée.

Par ailleurs, il est connu de l'art antérieur de mesurer l'énergie de neutrons incidents à l'aide d'un dispositif dans lequel des plaques solides de polyéthylènes sont introduites dans une cellule remplie de gaz (voir EP 2708918 A1). Les plaques permettent d'introduire un seuil de coupure d'énergie des neutrons et ainsi de remonter à l'énergie des neutrons incidents. L'utilisation d'un tel convertisseur solide induit cependant une perte importante d'efficacité de conversion des traces de recul nucléaires particulièrement pour des neutrons de haute énergie, ce qui diminue la précision de la mesure. De plus cette technique ne permet pas de reconstruire en 3D les traces laissées par les noyaux de recul.

### Résumé

Ainsi, un mode de réalisation prévoit de pallier tout ou partie des inconvénients décrits ci-dessus.

Un mode de réalisation prévoit un dispositif permettant de mesurer l'énergie de neutrons rapides de manière particulièrement précise.

Un mode de réalisation prévoit un dispositif permettant de mesurer l'énergie de neutrons rapides ou non de manière particulièrement précise.

Un mode de réalisation prévoit un dispositif pour mesurer l'énergie de neutrons incidents selon une première direction, contenant un gaz entre une cathode et une anode, l'anode comprenant une matrice de détecteurs d'électrons, la première direction étant orthogonale à la direction anode-cathode.

Selon un mode de réalisation, le dispositif comprend un circuit agencé pour :
a) mesurer le nombre, les positions et les instants d'arrivée d'électrons ; b) déterminer à partir des positions et instants d'arrivée l'angle $\theta'$ entre la première direction et la direction d'une trace ionisée laissée par un noyau dudit gaz après collision avec un des neutrons ; et c) déterminer l'énergie du neutron à partir du nombre d'électrons et de l'angle $\theta'$.

Selon un mode de réalisation, ledit circuit est agencé pour, à l'étape c) : déterminer à partir du nombre d'électrons $N_e$ l'énergie d'ionisation de la trace $E_i$ par la relation $E_i = N_e*\Delta E$, où $\Delta E$ est l'énergie de création d'une paire électron-ion dans le gaz ; et déterminer l'énergie

$E_n$ du neutron ($n_h$) par la relation :

$$E_n = A\frac{E_p}{\cos^2\theta'}$$

où $E_p$ vérifie la relation $E_p = E_i/Q(E_i)$, $Q(E_i)$ étant le facteur d'extinction de recul nucléaire associé à l'énergie d'ionisation de la trace $E_i$, et A est un coefficient constant fonction du rapport entre la masse du neutron et celle dudit noyau.

Selon un mode de réalisation, le dispositif est adapté à mesurer en outre l'énergie de neutrons incidents selon une deuxième direction, la deuxième direction étant parallèle à la direction anode-cathode, ledit circuit étant agencé pour : a) mesurer le nombre, les positions et les instants d'arrivée des électrons ; b') déterminer à partir des positions et instants d'arrivée l'angle $\theta$ entre la deuxième direction et la direction d'une trace ionisée laissée par un noyau dudit gaz heurté par un des neutrons ; et c') déterminer l'énergie du neutron à partir du nombre d'électrons et de l'angle $\theta$.

Selon un mode de réalisation, ledit circuit est agencé pour : déterminer à partir du nombre d'électrons $N_e$ l'énergie d'ionisation de la trace $E_i$ par la relation $E_i = N_e*\Delta E$, où $\Delta E$ est l'énergie de création d'une paire électron-ion dans le gaz ; et déterminer l'énergie $E_n$ du neutron par la relation :

$$E_n = A\frac{E_p}{\cos^2\theta}$$

où $E_p$ vérifie la relation $E_p = E_i/Q(E_i)$, $Q(E_i)$ étant le facteur d'extinction de recul nucléaire associé à l'énergie d'ionisation de la trace $E_i$, et A est un coefficient constant fonction du rapport entre la masse du neutron et celle dudit noyau.

Selon un mode de réalisation, le circuit comprend un support rotatif ayant un axe de rotation orthogonal aux première et deuxième directions, une rotation d'un quart de tour selon l'axe de rotation faisant passer d'une orientation où la première direction est parallèle à la direction d'incidence des neutrons à une orientation où la deuxième direction est parallèle à la direction d'incidence des neutrons.

Selon un mode de réalisation, la cathode et l'anode sont situées sur les faces opposées d'une cage de champ cylindrique agencée pour produire un champ électrique uniforme.

Selon un mode de réalisation, la cage de champ a un diamètre compris entre 10 et 35 cm et une longueur comprise entre 15 et 35 cm.

Selon un mode de réalisation, le gaz est un mélange d'hélium 4 et de $CO_2$ comprenant entre 4 et 6 % de $CO_2$.

Selon un mode de réalisation, la précision de la mesure des instants d'arrivée des électrons est comprise entre 16 et 40 ns.

Un mode de réalisation prévoit un procédé de mesure de l'énergie de neutrons incidents selon une direction, comprenant : a) prévoir un gaz entre une cathode et une anode, l'anode comprenant une matrice de détecteurs d'électrons ; b) orienter la direction anode-cathode orthogonalement à la direction d'incidence des neutrons ; c) mesurer le nombre et les positions et instants d'arrivée d'électrons provenant du gaz sur la matrice ; d) déterminer à partir des positions et instants d'arrivée l'angle θ' entre la direction d'incidence des neutrons et la direction d'une trace ionisée (122) laissée par un noyau dudit gaz (102) après collision avec un des neutrons ($n_h$) ; et e) déterminer l'énergie du neutron à partir du nombre d'électrons et de l'angle θ'.

Selon un mode de réalisation, le procédé comprend, à l'étape e) : déterminer à partir du nombre d'électrons $N_e$ l'énergie d'ionisation de la trace $E_i$ par la relation $E_i = N_e*\Delta E$, où $\Delta E$ est l'énergie de création d'une paire électron-ion dans le gaz ; et déterminer l'énergie $E_n$ du neutron ($n_h$) par la relation :

$$E_n = A\frac{E_P}{\cos^2\theta'}$$

où $E_p$ vérifie la relation $E_p = E_i/Q(E_i)$, $Q(E_i)$ étant le facteur d'extinction de recul nucléaire associé à l'énergie d'ionisation de la trace $E_i$, et A est un coefficient constant fonction du rapport entre la masse du neutron et celle dudit noyau.

Selon un mode de réalisation, le procédé comprend en outre successivement: b') orienter la direction anode-cathode parallèlement à la direction d'incidence des neutrons ; et f) mettre en oeuvre les étapes c), d) et e).

## Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est une vue schématique en coupe d'un dispositif de mesure d'énergie de neutrons ;
la figure 2 est une vue schématique en coupe d'un mode de réalisation d'un dispositif de mesure d'énergie de neutrons rapides ; et
la figure 3 est une vue schématique en perspective d'un mode de réalisation d'un dispositif de mesure d'énergie de neutrons.

## Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés. En particulier, l'enceinte de gaz, la cage de champ, les électrodes, la matrice de détecteurs d'électrons, et le circuit d'alimentation et de traitement ne sont pas décrits en détails, leur réalisation étant à la portée de l'homme du métier à partir des indications fonctionnelles de la description qui suit.

Dans la description qui suit, sauf précision contraire, l'expression "de l'ordre de" signifie à 10 % près, de préférence à 5 % près.

Il apparaît qu'avec un dispositif du type de celui de la figure 1, on ne peut pas déterminer correctement l'énergie $E_n$ lorsque les neutrons incidents sont des neutrons rapides $n_h$ d'énergie par exemple supérieure à 5 MeV.

En effet, l'angle θ entre la direction d'incidence du neutron et la trace 122 suit une loi de probabilité qui dépend de la nature du gaz et de l'énergie du neutron incident. Comme ceci est illustré dans la partie inférieure gauche de la figure 1, pour des neutrons rapides $n_h$, l'angle θ présente une probabilité élevée d'être proche de 90°. Par exemple, pour des neutrons d'énergie supérieure à 100 MeV, l'angle θ entre la direction d'incidence des neutrons et la trace n'est quasiment jamais inférieur à 80° quand les noyaux du gaz ont une masse supérieure à 1 GeV/c². En outre, quand le noyau de recul part selon un angle θ proche de 90°, son énergie initiale $E_p$ est faible et la trace est courte, par exemple entre 1 et 5 mm. Il en résulte que lorsque l'angle θ se rapproche de 90°, les instants d'arrivée des électrons aux détecteurs d'anode 126 et 128 se rapprochent l'un de l'autre. En pratique, les valeurs mesurées de ces instants d'arrivée se confondent à cause des limites de la précision de la mesure, typiquement de l'ordre de 25 ns. Si la différence t0-t1 calculée entre les temps de parcours est nulle, la valeur déterminée de l'angle θ est égale à 90°. La relation (3) correspond alors à une division par zéro, et l'énergie $E_n$ du neutron ne peut être déterminée.

Pour résoudre ce problème, on pourrait chercher à mesurer les instants d'arrivée des électrons sur la matrice avec une grande précision, par exemple meilleure que 10 ns, voire 1 ns, sans réduire le nombre de détecteurs de la matrice. Ceci poserait divers problèmes techniques.

La figure 2 est une vue schématique en coupe d'un mode de réalisation d'un dispositif de mesure d'énergie de neutrons rapides.

Le dispositif de la figure 2 comprend les mêmes éléments que ceux du dispositif la figure 1, agencés entre eux de la même manière, à la différence que le circuit 110 est remplacé par un circuit d'alimentation et de traitement 110'. Ces mêmes éléments et leur agencement ne seront pas décrits à nouveau en détail. Seules les différences entre les dispositifs des figures 1 et 2 seront mises en exergue.

A la différence du dispositif de la figure 1, la direction d'incidence des neutrons dans le dispositif de la figure 2 est orthogonale à la direction anode-cathode, selon une direction 200. Pour déterminer l'énergie d'un neutron incident $n_h$, le circuit 110' de la figure 2 procède de la même manière que le circuit 110 de la figure 1, à la différence qu'à la place de l'angle θ, le circuit 110' détermine l'angle θ' entre la direction 200 et la direction de la trace 120.

Le circuit 110' détermine l'angle θ' à partir des positions d'arrivée des électrons et de la différence t0-t1, en tenant compte de la vitesse des électrons pour aller de la trace 122 à l'anode.

Le circuit 110 détermine ensuite l'énergie du neutron $n_h$ à partir de l'énergie $E_p$ et de l'angle θ' en utilisant la relation :

$$E_n = A \frac{E_p}{\cos^2 \theta'} \qquad (4)$$

où A est le nombre constant, mentionné précédemment, fonction du rapport entre les masses du neutron et du noyau de recul.

On obtient ainsi une mesure particulièrement précise de l'énergie $E_n$ des neutrons, en particulier des neutrons rapides $n_h$, même lorsque l'angle θ' est proche de 90°, par exemple compris entre 80 et 89°. Ceci peut être expliqué de la manière suivante.

Si la trace 122 est dans un plan orthogonal à l'anode (cas illustré en figure 2), l'orientation de la trace ionisée 122 est proche de la direction anode cathode lorsque l'angle θ' est proche de 90°. Dans cette orientation de la trace, la différence t0-t1 entre les instants d'arrivée sur l'anode des électrons générés le long de la trace est plus élevée que dans l'orientation de la figure 1. Par exemple, pour un neutron de 50 MeV, la différence t0-t1 dépasse typiquement 500 ns dans l'orientation de la trace de la figure 2, alors qu'elle est inférieure à 50 ns dans l'orientation de la trace de la figure 1. Il en résulte que la différence t0-t1 calculée est précise. On peut alors déterminer l'angle θ' avec précision. En effet, l'angle θ' déterminé n'est pas confondu avec 90° dès lors que les détecteurs d'anode 126 et 128, atteints par les électrons générés aux extrémités de la trace 122, sont distincts l'un de l'autre. On choisit la résolution de la matrice pour que les détecteurs 126 et 128 soient distincts même pour des traces courtes et des angles proches de 90°. A titre d'exemple, la matrice de détecteurs a une résolution meilleure que 0,5 mm. On peut alors utiliser la relation (4) pour déterminer avec précision l'énergie $E_n$ des neutrons, en évitant la division par zéro qui en résulterait si l'angle θ' déterminé était confondu avec 90°.

On a ainsi obtenu un dispositif permettant une mesure de l'énergie de neutrons rapides, l'énergie des neutrons pouvant être supérieure à 5 MeV, par exemple plus de 200 MeV, voire plus de 600 MeV. On note que la trace peut être en dehors d'un plan orthogonal à l'anode. Dans ce mode de réalisation de l'invention - et contrairement au document EP 2708918 A1 mentionné dans l'art antérieur - il n'y a pas de convertisseur solide mais la conversion (c'est-à-dire la génération d'électrons à partir des neutrons incidents) est effectuée directement par le gaz contenu dans la cellule. Ceci permet donc d'améliorer l'efficacité de conversion et permet une reconstruction 3D de la trace laissée par le noyau de recul.

A titre d'exemple, le champ électrique, la nature et la pression du gaz sont choisies pour que la vitesse des électrons entre la trace et l'anode soit comprise entre 5 et 20 mm/μs, par exemple de l'ordre de 10 mm/μs. A titre d'exemple, le gaz 102 est un mélange d'hélium 4, $^4$He, et de dioxyde de carbone, $CO_2$, comprenant entre 4 et 6 % de $CO_2$. La pression absolue du gaz est par exemple comprise entre 500 mbar et 1 bar, de préférence 650 à 750 mbar. La cage de champ a par exemple un diamètre compris entre 10 et 35 cm, de préférence 10 cm, et une longueur comprise entre 15 et 35 cm, de préférence 25 cm. A titre d'exemple, le nombre de détecteurs d'anode est supérieur à 256x256, par exemple 960x960. A titre d'exemple, la précision de la mesure des instants d'arrivée des électrons sur les détecteurs est comprise entre 16 et 40 ns.

Comme ceci a été mentionné, le circuit 110' détermine l'énergie $E_p$ en fonction de l'énergie d'ionisation de la trace $E_i$, par la relation $E_p = E_i/Q$, où Q est le facteur d'extinction de recul nucléaire. A titre d'exemple, le facteur Q peut être une valeur $Q(E_i)$ mesurée au cours d'essais préalables et exprimée en fonction de l'énergie d'ionisation de la trace $E_i$. A titre d'exemple, le circuit 110' comprend une mémoire stockant les diverses valeurs mesurées $Q(E_i)$ du facteur Q, ou stockant une relation mathématique permettant de calculer des valeurs proches, par exemple à 10 % près, des valeurs mesurées. Plus l'énergie initiale $E_p$ des noyaux de recul est faible, plus le facteur Q a tendance à être faible. Le fait d'utiliser des valeurs mesurées $Q(E_i)$ permet alors d'obtenir une mesure précise de l'énergie des neutrons rapides.

On a décrit ci-dessus un dispositif permettant une mesure de l'énergie de neutrons rapides, par exemple de plus de 5 MeV. Cependant, on peut souhaiter mesurer en outre l'énergie de neutrons non rapides, par exemple de moins de 5 MeV, sans pour autant prévoir pour cela deux dispositifs différents, par exemple afin d'établir un spectre d'énergie d'une source de neutrons.

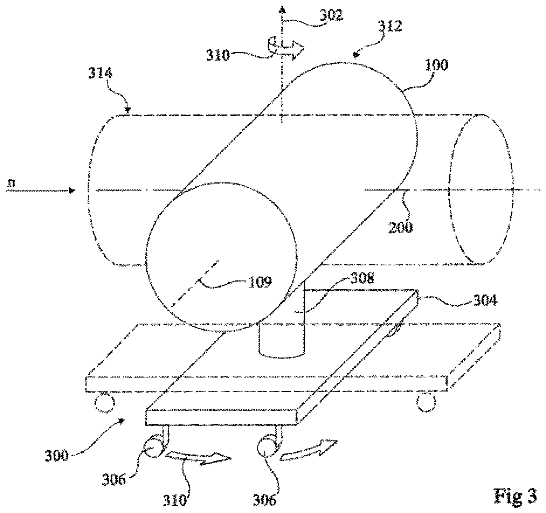

La figure 3 est une vue schématique en perspective d'un mode de réalisation d'un dispositif de mesure d'énergie de neutrons rapides ou non.

Le dispositif comprend un dispositif du type de celui des figures 1 et 2, comprenant une enceinte de gaz 100 d'axe 109 (direction anode-cathode). La direction 200 est également indiquée. Comme cela a été mentionné ci-dessus, le dispositif permet de mesurer l'énergie de neutrons rapides lorsque la direction 200 est alignée avec la direction d'incidence des neutrons.

Le dispositif comprend en outre un support rotatif 300. L'axe 302 de rotation du support 300 est orthogonal à la fois à la direction 200 et à la direction anode-cathode. A titre d'exemple, l'axe 302 est vertical, et le support rotatif 300 comprend un chariot 304 sur roues pivotantes 306 et un bloc de liaison 308 qui solidarise le chariot et l'enceinte 100. A titre de variante, on peut utiliser tout autre support rotatif d'axe parallèle à l'axe 302, vertical ou non.

Une rotation 310 du dispositif d'un quart de tour permet de passer de la position, représentée en traits pleins et désignée par la référence 312, dans laquelle la direction 200 est alignée avec la direction d'incidence des neutrons, à celle, représentée en pointillés et désignée par la référence 314, dans laquelle la direction anode-cathode est alignée avec la direction d'incidence des neutrons.

Dans la position 312, le circuit 110' mesure l'énergie des neutrons rapides de la manière décrite ci-dessus en relation avec la figure 2, c'est-à-dire en utilisant l'angle $\theta$'. Dans la position 314, le circuit 110' mesure l'énergie de neutrons non rapides de la même manière que le circuit 110 de la figure 1, c'est-à-dire en utilisant l'angle $\theta$.

Du fait que le circuit 110' mesure l'énergie de neutrons incidents selon la direction 200 et celle de neutrons incidents selon la direction anode-cathode, on peut mesurer l'énergie de neutrons rapides ou non avec un dispositif unique. Le support rotatif 300 permet d'effectuer cette mesure de manière particulièrement simple.

De préférence, dans la position 314, le circuit 110' utilise des valeurs mesurées $Q(E_i)$ du facteur d'extinction du recul nucléaire en fonction de l'énergie $E_i$ d'ionisation de la trace.

Des modes de réalisation particuliers ont été décrits. Diverses variantes et modifications apparaîtront à l'homme de l'art. En particulier, bien qu'un gaz particulier ait été mentionné, il est possible d'utiliser tout gaz adapté à la détection de neutrons par collision avec un noyau du gaz et ionisation d'une trace dans le gaz, par exemple un mélange de $C_4H_{10}$ et de $CHF_3$ comprenant entre 30 et 50 % de $CHF_3$, ou un mélange de 70 % de $CF_4$ et de 30 % de $CHF_3$.

En outre, toute configuration d'anode et de cathode comprenant entre elles un gaz est possible, l'enceinte pouvant être cylindrique ou non.

Bien que le dispositif de la figure 3 comprenne un support rotatif, on pourra aussi prévoir tout autre moyen d'orienter le dispositif. En particulier, on pourra prévoir que le dispositif soit dépourvu de support rotatif, par exemple un dispositif portable pouvant être orienté manuellement.

Bien que, dans les modes de réalisation décrits ci-dessus, les neutrons aient tous une même direction d'incidence orthogonale à la direction anode-cathode, les neutrons peuvent aussi être en provenance d'une source de neutrons proche du dispositif. Les neutrons n'ont alors pas tous exactement la même direction d'incidence. On comprendra que, lorsque la direction d'incidence des neutrons est dite "orthogonale" à la direction anode-cathode, cela signifie que la direction d'incidence est orthogonale à la direction anode-cathode à 10° près, de préférence à 5° près.

## Revendications

1. Dispositif pour mesurer l'énergie de neutrons ($n_h$) incidents selon une première direction (200), contenant un gaz (102) entre une cathode (104) et une anode (106), l'anode comprenant une matrice de détecteurs d'électrons, la première direction étant orthogonale à la direction anode-cathode, et comprenant un circuit (100') adapté pour :

   a. mesurer le nombre, les positions (126, 128) et les instants d'arrivée d'électrons ;
   b. déterminer à partir des positions et instants d'arrivée l'angle $\theta$' entre la première direction (200) et la direction d'une trace ionisée (122) laissée par un noyau dudit gaz (102) après collision avec un des neutrons ($n_h$) ; et
   c. déterminer l'énergie du neutron à partir du nombre d'électrons et de l'angle $\theta$'.

2. Dispositif selon la revendication 1, dans lequel ledit circuit (110') est agencé pour, à l'étape c) :

   déterminer à partir du nombre d'électrons $N_e$ l'énergie d'ionisation de la trace $E_i$ par la relation $E_i = N_e * \Delta E$, où $\Delta E$ est l'énergie de création d'une paire électron-ion dans le gaz ; et
   déterminer l'énergie $E_n$ du neutron ($n_h$) par la relation :

   $$E_n = A \frac{E_P}{\cos^2 \theta'}$$

   où $E_p$ vérifie la relation $E_p = E_i/Q(E_i)$, $Q(E_i)$ étant le facteur d'extinction de recul nucléaire associé à l'énergie d'ionisation de la trace $E_i$, et $A$ est un coefficient constant fonction du rapport entre la masse du neutron et celle dudit noyau.

3. Dispositif selon la revendication 1 pour mesurer en outre l'énergie de neutrons (n) incidents selon une deuxième direction (109), la deuxième direction étant parallèle à la direction anode-cathode, dans lequel ledit circuit (110') est agencé pour :

   a) mesurer le nombre, les positions (126, 128) et les instants d'arrivée des électrons ;
   b') déterminer à partir des positions et instants d'arrivée l'angle $\theta$ entre la deuxième direction (109) et la direction d'une trace ionisée (122) laissée par un noyau dudit gaz (102) heurté par un des neutrons ($n_h$) ; et
   c') déterminer l'énergie du neutron à partir du nombre d'électrons et de l'angle θ.

**4.** Dispositif selon la revendication 3, dans lequel ledit circuit est agencé pour:

déterminer à partir du nombre d'électrons $N_e$ l'énergie d'ionisation de la trace $E_i$ par la relation $E_i = N_e \! * \! \Delta E$, où $\Delta E$ est l'énergie de création d'une paire électron-ion dans le gaz ; et
déterminer l'énergie $E_n$ du neutron ($n_h$) par la relation :

$$E_n = A \frac{E_P}{\cos^2 \theta}$$

où $E_p$ vérifie la relation $E_p = E_i/Q(E_i)$, $Q(E_i)$ étant le facteur d'extinction de recul nucléaire associé à l'énergie d'ionisation de la trace $E_i$, et
A est un coefficient constant fonction du rapport entre la masse du neutron et celle dudit noyau.

**5.** Dispositif selon la revendication 3 ou 4, comprenant un support rotatif (300) ayant un axe de rotation (302) orthogonal aux première (109) et deuxième (200) directions, une rotation (310) d'un quart de tour selon l'axe de rotation faisant passer d'une orientation où la première direction est parallèle à la direction d'incidence des neutrons à une orientation où la deuxième direction est parallèle à la direction d'incidence des neutrons.

**6.** Dispositif selon l'une quelconque des revendications 1 à 5, dans lequel la cathode (104) et l'anode (106) sont situées sur les faces opposées d'une cage (108) de champ cylindrique agencée pour produire un champ électrique uniforme.

**7.** Dispositif selon la revendication 6, dans lequel la cage de champ (108) a un diamètre compris entre 10 et 35 cm et une longueur comprise entre 15 et 35 cm.

**8.** Dispositif selon l'une quelconque des revendications 1 à 7, dans lequel le gaz (102) est un mélange d'hélium 4 et de $CO_2$ comprenant entre 4 et 6 % de $CO_2$.

**9.** Dispositif selon l'une quelconque des revendications 1 à 8, dans lequel la précision de la mesure des instants d'arrivée des électrons est comprise entre 16 et 40 ns.

**10.** Procédé de mesure de l'énergie de neutrons incidents selon une direction (200), comprenant :

a) prévoir un gaz entre une cathode (104) et une anode (106), l'anode comprenant une matrice de détecteurs d'électrons ;
b) orienter la direction anode-cathode orthogonalement à la direction d'incidence des neutrons ;
c) mesurer le nombre et les positions (126, 128) et instants d'arrivée d'électrons provenant du gaz sur la matrice ;
d) déterminer à partir des positions et instants d'arrivée l'angle θ' entre la direction d'incidence des neutrons et la direction d'une trace ionisée (122) laissée par un noyau dudit gaz (102) après collision avec un des neutrons ($n_h$) ; et
e) déterminer l'énergie du neutron à partir du nombre d'électrons et de l'angle θ'.

**11.** Procédé selon la revendication 10, comprenant, à l'étape e) :

déterminer à partir du nombre d'électrons $N_e$ l'énergie d'ionisation de la trace $E_i$ par la relation $E_i = N_e \! * \! \Delta E$, où $\Delta E$ est l'énergie de création d'une paire électron-ion dans le gaz ; et
déterminer l'énergie $E_n$ du neutron ($n_h$) par la relation :

$$E_n = A \frac{E_P}{\cos^2 \theta'}$$

où $E_p$ vérifie la relation $E_p = E_i/Q(E_i)$, $Q(E_i)$ étant le facteur d'extinction de recul nucléaire associé à l'énergie d'ionisation de la trace $E_i$, et
A est un coefficient constant fonction du rapport entre la masse du neutron et celle dudit noyau.

**12.** Procédé selon la revendication 10 ou 11, comprenant en outre successivement :

b') orienter la direction anode-cathode parallèlement à la direction d'incidence des neutrons ; et
f) mettre en oeuvre les étapes c), d) et e).

**Patentansprüche**

**1.** Vorrichtung zum Messen der Energie von in einer ersten Richtung (200) einfallenden Neutronen ($n_h$), die ein Gas (102) zwischen einer Kathode (104) und einer Anode (106) enthält, wobei die Anode eine Anordnung von Elektronendetektoren umfasst, wobei die erste Richtung orthogonal zur Anoden-Kathoden-Richtung ist, und eine Schaltung (100') umfasst, die ausgelegt ist zum:

a. Messen der Anzahl, Positionen (126, 128) und Ankunftszeitpunkte von Elektronen;
b. Bestimmen, auf der Basis der Positionen und Ankunftszeitpunke, des Winkels θ' zwischen der ersten Richtung (200) und der Richtung einer ionisierten Spur (122), die von einem Kern des Gases (102) nach der Kollision mit einem der Neutronen ($n_h$) hinterlassen wird; und

c. Bestimmen der Energie des Neutrons auf der Basis der Anzahl von Elektronen und des Winkels $\theta'$.

2. Vorrichtung nach Anspruch 1, wobei die Schaltung (110) ausgelegt ist zum, in Schritt c):

Bestimmen, auf der Basis der Anzahl von Elektronen $N_e$, der Ionisierungsenergie der Spur $E_i$ durch die Beziehung $E_i = N_e * \Delta E$, wobei $\Delta E$ die Energie der Erzeugung eines Elektron-Ionen-Paares im Gas ist; und

Bestimmen der Energie $E_n$ des Neutrons ($n_h$) durch die Beziehung:

$$E_n = A \frac{E_P}{\cos^2 \theta'}$$

wobei $E_p$ die Beziehung $E_p = E_i/Q(E_i)$ verifiziert, wobei $Q(E_i)$ der mit der Ionisierungsenergie der Spur $E_i$ assoziierte Kernrückstoß-Extinktionsfaktor ist, und

A ein konstanter Koeffizient in Abhängigkeit vom Verhältnis der Masse des Neutrons zu der des Kerns ist.

3. Vorrichtung nach Anspruch 1, um ferner die Energie von in einer zweiten Richtung (109) einfallenden Neutronen (n) zu messen, wobei die zweite Richtung parallel zur Anoden-Kathoden-Richtung ist, wobei die Schaltung (110') ausgelegt ist zum:

a) Messen der Anzahl, Positionen (126, 128) und Ankunftszeitpunkte der Elektronen;

b') Bestimmen, auf der Basis der Positionen und Ankunftszeitpunkte, des Winkels $\theta$ zwischen der zweiten Richtung (109) und der Richtung einer ionisierten Spur (122), die von einem Kern des Gases (102), der von einem der Neutronen ($n_h$) getroffen wurde, hinterlassen wurde; und

c') Bestimmen der Energie des Neutrons auf der Basis der Anzahl von Elektronen und des Winkels $\theta$.

4. Vorrichtung nach Anspruch 3, wobei die Schaltung ausgelegt ist zum:

Bestimmen, auf der Basis der Anzahl von Elektronen $N_e$, der Ionisierungsenergie der Spur $E_i$ durch die Beziehung $E_i = N_e * \Delta E$, wobei $\Delta E$ die Energie der Erzeugung eines Elektron-Ionen-Paares im Gas ist; und

Bestimmen der Energie $E_n$ des Neutrons ($n_h$) durch die Beziehung:

$$E_n = A \frac{E_P}{\cos^2 \theta}$$

wobei $E_p$ die Beziehung $E_p = E_i/Q(E_i)$ verifiziert, wobei $Q(E_i)$ der mit der Ionisierungsenergie der Spur $E_i$ assoziierte Kernrückstoß-Extinktionsfaktor ist, und

A ein konstanter Koeffizient in Abhängigkeit vom Verhältnis der Masse des Neutrons zu der des Kerns ist.

5. Vorrichtung nach Anspruch 3 oder 4, die einen drehbaren Träger (300) mit einer Drehachse (302) orthogonal zur ersten (109) und zweiten (200) Richtung umfasst, wobei eine Drehung (310) von einer viertel Umdrehung entlang der Drehachse von einer Orientierung, bei der die erste Richtung parallel zur Einfallsrichtung der Neutronen verläuft, in eine Orientierung wechselt, in der die zweite Richtung parallel zur Einfallsrichtung der Neutronen verläuft.

6. Vorrichtung nach einem der Ansprüche 1 bis 5, wobei sich die Kathode (104) und die Anode (106) auf den gegenüberliegenden Seiten eines Käfigs (108) mit zylindrischem Feld befinden, der zum Produzieren eines gleichmäßigen elektrischen Feldes ausgelegt ist.

7. Vorrichtung nach Anspruch 6, wobei der Feldkäfig (108) einen Durchmesser zwischen 10 und 35 cm und eine Länge zwischen 15 und 35 cm aufweist.

8. Vorrichtung nach einem der Ansprüche 1 bis 7, wobei das Gas (102) ein Gemisch aus Helium 4 und $CO_2$ ist, das zwischen 4 und 6% $CO_2$ enthält.

9. Vorrichtung nach einem der Ansprüche 1 bis 8, wobei die Genauigkeit der Messung der Elektronenankunftszeitpunkte zwischen 16 und 40 ns liegt.

10. Verfahren zum Messen der Energie von in einer Richtung (200) einfallenden Neutronen, das Folgendes umfasst:

a) Bereitstellen eines Gases zwischen einer Kathode (104) und einer Anode (106), wobei die Anode eine Anordnung von Elektronendetektoren umfasst;

b) Orientieren der Anoden-Kathoden-Richtung orthogonal zur Einfallsrichtung der Neutronen;

c) Messen der Anzahl und Positionen (126, 128) und Ankunftszeitpunkte von Elektronen aus dem Gas auf der Anordnung;

d) Bestimmen, auf der Basis der Positionen und Ankunftszeitpunkte, des Winkels $\theta'$ zwischen der Einfallsrichtung der Neutronen und der Richtung einer ionisierten Spur (122), die von einem Kern des Gases (102) nach der Kollision mit einem der Neutronen ($n_h$) hinterlassen wird; und
e) Bestimmen der Energie des Neutrons auf der Basis der Anzahl von Elektronen und des Winkels θ'.

11. Verfahren nach Anspruch 10, das in Schritt e) Folgendes umfasst:

Bestimmen, auf der Basis der Anzahl von Elektronen $N_e$, der Ionisierungsenergie der Spur $E_i$ durch die Beziehung $E_i = N_e * \Delta E$, wobei $\Delta E$ die Energie der Erzeugung eines Elektron-Ionen-Paares im Gas ist; und
Bestimmen der Energie $E_n$ des Neutrons ($n_h$) durch die Beziehung:

$$E_n = A \frac{E_P}{\cos^2 \theta'}$$

wobei $E_p$ die Beziehung $E_p = E_i/Q(E_i)$ verifiziert, wobei $Q(E_i)$ der mit der Ionisierungsenergie der Spur $E_i$ assoziierte Kernrückstoß-Extinktionsfaktor ist, und
A ein konstanter Koeffizient in Abhängigkeit vom Verhältnis der Masse des Neutrons zu der des Kerns ist.

12. Verfahren nach Anspruch 10 oder 11, das ferner nacheinander Folgendes umfasst:

b') Orientieren der Anoden-Kathoden-Richtung parallel zur Einfallsrichtung der Neutronen; und
f) Durchführen der Schritte c), d) und e).

**Claims**

1. A device for measuring the energy of neutrons ($n_h$) incident in a first direction (200), containing a gas (102) between a cathode (104) and an anode (106), the anode comprising a matrix array of electron detectors, the first direction being orthogonal to the anode-cathode direction, and comprising a circuit (100') suitable for:

a. measuring the number, the positions (126, 128) and the times of arrival of electrons;
b. determining, from the positions and times of arrival, the angle θ' between the first direction (200) and the direction of an ionized trace (122) left by a nucleus of said gas (102) after collision with one of the neutrons ($n_h$); and
c. determining the energy of the neutron from the number of electrons and the angle θ'.

2. The device according to claim 1, wherein said circuit (110') is arranged to, in step c):

determine, from the number of electrons $N_e$, the ionization energy of the trace $E_i$, via the relationship $E_i = N_e * \Delta E$, where $\Delta E$ is the energy to create an electron-ion pair in the gas; and
determine the energy $E_n$ of the neutron ($n_h$) via the relationship:

$$E_n = A \frac{E_P}{\cos^2 \theta'}$$

where $E_p$ respects the relationship $E_p = E_i/Q(E_i)$, $Q(E_i)$ being the nuclear recoil quenching factor associated with the ionization energy of the trace $E_i$, and
A is a constant coefficient dependent on the ratio between the mass of the neutron and the mass of said nucleus.

3. The device according to claim 1 for further measuring the energy of neutrons (n) incident in a second direction (109), the second direction being parallel to the anode-cathode direction, wherein said circuit (110') is arranged to:

a) measure the number, the positions (126, 128) and the times of arrival of the electrons;
b') determine, from the positions and times of arrival, the angle θ between the second direction (109) and the direction of an ionized trace (122) left by a nucleus of said gas (102) struck by one of the neutrons ($n_h$); and
c') determine the energy of the neutron from the number of electrons and the angle θ.

4. The device according to claim 3, wherein said circuit is arranged to:

determine, from the number of electrons $N_e$, the ionization energy of the trace $E_i$, via the relationship $Ei = N_e * \Delta E$, where $\Delta E$ is the energy to create an electron-ion pair in the gas; and
determine the energy $E_n$ of the neutron ($n_h$) via the relationship:

$$E_n = A \frac{E_P}{\cos^2 \theta}$$

where $E_p$ respects the relationship $E_p = E_i/Q(E_i)$, $Q(E_i)$ being the nuclear recoil quenching factor associated with the ionization energy of the trace $E_i$, and
A is a constant coefficient dependent on the ratio between the mass of the neutron and the mass of said nucleus.

**5.** The device according to claim 3 or 4, comprising a rotary holder (300) having an axis of rotation (302) orthogonal to the first direction (109) and to the second direction (200), a rotation (310) of one quarter of a revolution about the axis of rotation making the device pass from an orientation in which the first direction is parallel to the direction of incidence of the neutrons to an orientation in which the second direction is parallel to the direction of incidence of the neutrons.

**6.** The device according to one of claims 1 to 5, wherein the cathode (104) and the anode (106) are located on the opposite sides of a cylindrical field cage (108) arranged to produce a uniform electric field.

**7.** The device according to claim 6, wherein the field cage (108) has a diameter comprised between 10 and 35 cm and a length comprised between 15 and 35 cm.

**8.** The device according to any one of claims 1 to 7, wherein the gas (102) is a mixture of helium 4 and of $CO_2$ comprising between 4 and 6% $CO_2$.

**9.** The device according to any one of claims 1 to 8, wherein the precision of the measurement of the times of arrival of the electrons is comprised between 16 and 40 ns.

**10.** A method for measuring the energy of neutrons incident in a direction (200), comprising:

a) providing a gas between a cathode (104) and an anode (106), the anode comprising a matrix array of electron detectors;
b) orienting the anode-cathode direction orthogonal to the direction of incidence of the neutrons;
c) measuring the number and the positions (126, 128) and the times of arrival of electrons coming from gas on the matrix array;
d) determining, from the positions and times of arrival, the angle θ' between the direction of incidence of the neutrons and the direction of an ionized trace (122) left by a nucleus of said gas (102) after collision with one of the neutrons ($n_h$); and
e) determining the energy of the neutron from the number of electrons and from the angle θ'.

**11.** The method according to claim 10, comprising, in step e):

determining, from the number of electrons $N_e$, the ionization energy of the trace $E_i$, via the relationship $E_i = N_e * \Delta E$, where $\Delta E$ is the energy to create an electron-ion pair in the gas; and determining the energy En of the neutron ($n_h$) via the relationship:

$$En = A\,E_n = A\frac{Ep}{\cos^2\theta'}$$

where $E_p$ respects the relationship $E_p = E_i/Q(E_i)$, $Q(E_i)$ being the nuclear recoil quenching factor associated with the ionization energy of the trace $E_i$, and
A is a constant coefficient dependent on the ratio between the mass of the neutron and the mass of said nucleus.

**12.** The method according to claim 10 or 11, further comprising successively:

b') orienting the anode-cathode direction parallel to the direction of incidence of the neutrons; and
f) implementing steps c), d) and e).

Fig 1

Fig 2

Fig 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2708918 A1

**Littérature non-brevet citée dans la description**

- **MAIRE et al.** *IEEE Transactions On Nuclear Science,* 2014, vol. 61 (4